# EUROPÄISCHE PATENTSCHRIFT

(11) **EP 0 768 968 B1**
(45) Veröffentlichungstag und Bekanntmachung des Hinweises auf die Patenterteilung: **09.09.1998**
(21) Anmeldenummer: 95924183.7
(22) Anmeldetag: 03.07.1995
(51) Int. Cl.: B62K 15/00

(54) **KLAPPFAHRRAD**
FOLDING BICYCLE
BICYCLETTE PLIANTE

(30) Priorität: 06.07.1994 DE 4423647
(43) Veröffentlichungstag der Anmeldung: 23.04.1997
(73) Patentinhaber: Müller, Thomas, 42719 Solingen (DE)
(72) Erfinder: Müller, Thomas, 42719 Solingen (DE)
(74) Vertreter: Vomberg, Friedhelm, Dipl.-Phys.
(86) Internationale Anmeldenummer: DE9500893
(87) Internationale Veröffentlichungsnummer: WO9601204

(56) Entgegenhaltungen:
- GB-A- 2 232 390
- US-A- 3 374 009
- US-A- 3 865 403

## Beschreibung

Die Erfindung betrifft ein Fahrrad mit einem arretierbaren, horizontal und am Rahmen angeordneten Drehgelenk, um dessen Achse die angelenkten Rahmenteile nach Lösen der Arretierung schwenkbar sind.

Ein Fahrrad dieser Art ist beispielsweise in der DE-A-29 46 532 beschrieben. Dieses Fahrrad besitzt ein oberes Rahmenrohr, mit dem die Gabelhalterung und die Hinterachse gehalten bzw. miteinander verbunden werden. Dieses Rahmenrohr ist zweiteilig gefertigt, wobei die beiden Teile über ein Drehgelenk miteinander verbunden sind. Die Sattelrohrstütze und die Aufhängung für das Tretlager, die nach oben bzw. nach unten wegragen, sind am hinteren Rahmenteil befestigt. Mit dieser Konstruktion soll es möglich sein, das Vorderrad und das Hinterrad nebeneinander zu verschwenken. Allerdings kann die gewünschte deckungsgleiche Position in der Praxis nicht erreicht werden, weil Vorder- und Hinterrad in derselben Ebene fluchten, ferner das Tretlager und/oder der Lenker eine diesbezügliche Bewegung hemmen. Der erreichbare Schwenkwinkel führt zwar zu einer Verkürzung des Abstandes des Vorder- und des Hinterrades, wird jedoch durch die starre Gabel-Lenkeranordnung mit einer Vergrößerung der diagonalen Länge zwischen der Hinterradnabe und dem vordersten Lenkerteil erkauft, so daß das Rad im verschwenkten Zustand nach wie vor für eine Gepäckraumaufnahme eines Pkw ungeeignet ist.

Alternativ hierzu sind Klappräder bekannt, die ein einziges Rahmenteil zwischen der Lenker-Gabelaufnahme und dem Tretlager besitzen, das ein über einen Bolzen oder einen Spannverschluß arretierbares Scharnier aufweist, das Klappbewegungen um eine vertikale Achse erlaubt oder alternativ hierzu eine Lösung der Bolzenverbindung, um die dann getrennten Vorder- und Hinterteile des Klappfahrrades transportieren zu können.

Die Nachteile des letztgenannten Klappfahrrades wie auch des eingangs erwähnten Fahrrades liegen in einer geringen Steifigkeit und damit verbundenem schlechten Geradeauslauf sowie dem bei Klappfahrrädern als nachteilig empfundenden geringen Fahrkomfort durch kleine Räder.

In der DE 37 01 803 A1 wird daher ein Fahrrad mit einem faltbaren Rahmen vorgeschlagen, an dem über eine Schwinge das Hinterrad befestigt ist, die das Hinterrad mit dem Tretlager verbindet und die um die Achse der Tretlagerwelle schwenkbar ist. Um dieses Fahrrad zusammenklappen zu können, muß zunächst das Hinterrad ausgebaut, ferner das Vorderrad aus der Gabel entfernt werden und anschließend die Hinterradschwinge um das Tretlager herum in Richtung auf die Vorderradgabel geschwenkt werden, wozu die Verbindung der Hinterradstrebe mit der Hinterradschwinge bzw. dem Sattelrohr gelöst werden muß. Selbst wenn Hinter- und Vorderrad mit Schnellspann-Naben ausgestattet sind, gestaltet sich das Zusammenklappen bzw. das Auseinanderklappen und Aufrüsten des Fahrrades als relativ aufwendig.

Aus der DE 39 26 785 A1 ist ein Klapprad bekannt, das einen in der Mitte klappbaren Rahmen besitzt, bei dem die Haltevorrichtung mittels zweier Haltegabeln durch vertikale Vierteldrehung an dem Tretlagergehäuse festgehalten wird. Hierzu wird ein Schwenkarm mit zwei Scharnieren benötigt, mittels denen die vordere Fahrradhälfte von der hinteren Fahrradhälfte getrennt und die vordere Fahrradhälfte durch zweimaliges Schwenken um jeweils 90° in eine parallele Stellung neben der hinteren Fahrradhälfte geschwenkt werden soll. Auch dieses Rad benötigt zur Ummontage aufwendige Arbeiten.

Es ist daher Aufgabe der vorliegenden Erfindung, ein Fahrrad der eingangs genannten Art anzugeben, das in leicht handhabbarer Weise auf engsten Raum gebracht werden kann, das im fahrbereiten Zustand eine optimale (Rahmen-)Steifigkeit besitzt und das konstruktiv einfach aufgebaut ist.

Diese Aufgabe wird durch ein Fahrrad mit den Merkmalen nach Anspruch 1 gelöst.

Dieses Fahrrad ist erfindungsgemäß dadurch gekennzeichnet, daß die Rahmenteile über ein horizontal ausfahrbares Teleskop und/oder über um eine vertikale Achse schwenkbare Schwingen aus ihrer Lage in einer Ebene parallel zueinander verschiebbar sind. Erst die Möglichkeit über ein teleskopierbares Gelenk und/oder entsprechende Schwingen die vordere Fahrradhälfte gegenüber der hinteren Fahrradhälfte in eine parallel versetzte Lage zu bringen, ermöglicht die Drehung um eine horizontale Achse bis hin zu einer Stellung, bei der das Vorder- und das Hinterrad parallel zueinander in deckungsgleiche Lage gebracht werden. Die konstruktiv bevorzugte Teleskopverbindung der betreffenden Rahmenteile wird nur vor dem gegenseitigen Verschwenken dieser Rahmenteile auseinandergefahren, hingegen bei Herstellung des fahrbereiten Zustandes des Fahrrades zusammengeschoben, wobei die entsprechenden Rahmenteile miteinander, vorzugsweise über einen Schnellspannverschluß, verriegelt werden.

Weitere Ausgestaltungen der Erfindung sind in den Unteransprüchen beschrieben.

So stehen von dem Drehgelenk die Rahmenteile zur Halterung der Lenkeraufnahme, des Tretlagers und des Hinterrades sternförmig ab, so daß die jeweiligen Abstände vom Drehgelenkpunkt zu den Rahmenteilenden eine Optimierung der Rahmensteifigkeit erlauben.

Vorzugsweise wird der den Fahrradsitz endseitig tragende Holm ebenfalls an dem Drehpunkt angelenkt, und zwar dergestalt, daß auch dieser Holm um die Drehachse verschwenkbar ist.

Um die Teleskopausfahrlänge möglichst gering zu halten, ist nach einer weiteren Ausgestaltung der Erfindung vorgesehen, daß der Rahmenteil zur Halterung der Lenkeraufnahme und/oder des Hinterrades endseitig oder außenseitig des Teleskopes oder (jeweils) einer der Schwingen angeordnet ist (sind). Die betreffenden Rahmenteile liegen, anders ausgedrückt, jeweils längsseitig links und rechts in bezug auf die Fahrradlängsachse als endseitige Verbindungen zu den Teleskopteilen.

Eine weitere Reduzierung des Volumens des Fahrrades im zusammengeklappten Zustand ergibt sich, wenn die Gabel zur Halterung des Forderrades und/oder der Rahmenteil zur Halterung des Hinterrades einarmig ausgeführt werden. Beispielsweise kann die einseitige Vorderradgabel bezogen auf die Fahrradlängsachse links angeordnet sein und die entsprechende Hinterradgabel als Teil des betreffenden Rahmenteiles rechts vom Hinterrad liegen.

Vorzugsweise sind die Gabel und der Rahmenteil zur Halterung des Hinterrades entlang ihrer oder seiner Längsachse gebogen, insbesondere um eine etwa der Radachsenlänge entsprechendes Maß versetzt, so daß die betreffenden Rahmenteile mit Ausnahme der gebogenen Endstücke im wesentlichen mit den Rädern im fahrbereiten Zustand in einer Ebene liegen.

Da das Auflegen und Abnehmen der Kette allein schon wegen der Gefahr des Verschmutzens von Händen und Kleidung unerwünscht ist, ist nach einer weiteren Ausgestaltung der Winkelabstand, den das Rahmenteil des Tretlagers und das Rahmenteil zur Halterung des Hinterrades im Drehgelenk unveränderbar, vorzugsweise einteilig, eingestellt, hingegen sind die übrigen Rahmenteile gegeneinander um die horizontale Achse des Drehgelenkes verdrehbar. Die Kette bleibt somit auch beim Zusammenschieben des Fahrrades in gespanntem, ungelöstem Zustand.

Wird der den Fahrradsitz tragende Holm im wesentlichen mittig oder an einer Drehgelenkinnenseite auf der Drehachse des Drehgelenkes angelenkt, kann der betreffende Rahmenteil in Richtung der Räder verschwenkt werden, ohne daß durch die Verschwenkung eine größere Packbreite benötigt wird. Bevorzugt ist der Sattel einschließlich des Sattelträgers zwischen jeweiligen Ausnehmungen im Vorder- und im Hinterrad im zusammengeklappten Zustand des Fahrrades, bei dem die beiden Räder deckungsgleich nebeneinanderliegen, versenkbar. Dies wird durch entsprechende Speichenanordnung bzw. Hohlräume zwischen Speichen realisiert.

Eine in der Praxis leicht erzielbare Breitenreduzierung des Fahrrades kann bereits dadurch erreicht werden, daß der Lenker gegenüber der Gabel um 90° verdreht wird. Eine weitere Optimierung ist möglich, wenn die beiden Lenkerhälften nach Lösen einer Arretierung parallel oder spitzwinklig zur Gabel schwenkbar sind.

Solche Ausbildungen sind im Prinzip nach dem Stand der Technik bekannt, beispielsweise aus den Unterlagen des DE-U1-84 27 632. Vorzugsweise weist die Arretierung jeweilige Schalen der Lenkerhälften übergreifende Spannverschlüsse auf.

Damit das zusammengeklappte Fahrrad beim Tragen nicht auseinanderklappen kann, ist weiterhin vorzugsweise vorzugesehen, daß die Lenkerhälftenvorderseiten jeweils korrespondierende Verschlußteile aufweisen, über die die Lenkerhälften im zusammengeklappten Zustand aneinander arretierbar sind. Nach Umklappen der Lenkerhälften kann so ein Wiederaufklappen verhindert werden. Außerdem können nach einer Weiterbildung der Erfindung die nach dem Einklappen des Lenkers vorstehenden Lenkerhälftenrückseiten (-enden) als Standfuß(-stütze) dienen, der ein mögliches Kippen des zusammengeklappten Fahrrades verhindert.

Aus Gründen des Bedienungskomforts ist das Teleskop-Drehgelenk über einen Schnellspannverschluß arretierbar. Für das (einzige) Drehgelenk des Fahrrades bieten sich erfindungsgemäß unterschiedliche Konstruktionen an: Entweder eine identische Drehgelenkachse für alle dort abgelenkten Rahmenteile oder neben einer Hauptdrehachse, die gleichzeitig Teleskoplängsachse ist, weitere Drehachsen, die auf Satellitenbahnen um die Hauptdrehachse in Nuten geführt werden.

Schließlich können noch Anschläge in den Drehgelenken entsprechend den endseitigen Betriebszuständen - fahrbereit oder zusammengeklappt - vorgesehen sein, die die weitere Drehbarkeit der betreffenden Rahmenteile blockieren.

Ausführungsbeispiele der Erfindung sind in den Zeichnungen dargestellt. Es zeigen
- Fig. 1: eine Prinzipdarstellung des erfindungsgemäßen Fahrrades in einer Seitenansicht,
- Fig. 1a: eine Detail-Draufsicht in Richtung des Pfeiles Ia,
- Fig. 1b: eine Seitenansicht auf das Drehgelenk, beide mit teleskopierbarem Drehgelenk,
- Fig. 1c und 1d: jeweils alternative Ausführungsformen in Ansichten entsprechend Fig. 1a und 1b,
- Fig. 2 und 3: jeweils Seitenansichten des Fahrrades in verschiedenen Schwenk-Zuständen,
- Fig. 4a: eine Draufsicht auf eine Lenker-Ausführungsform und
- Fig. 4b: dieselbe Ansicht mit abgeklappten Lenkerhälften.

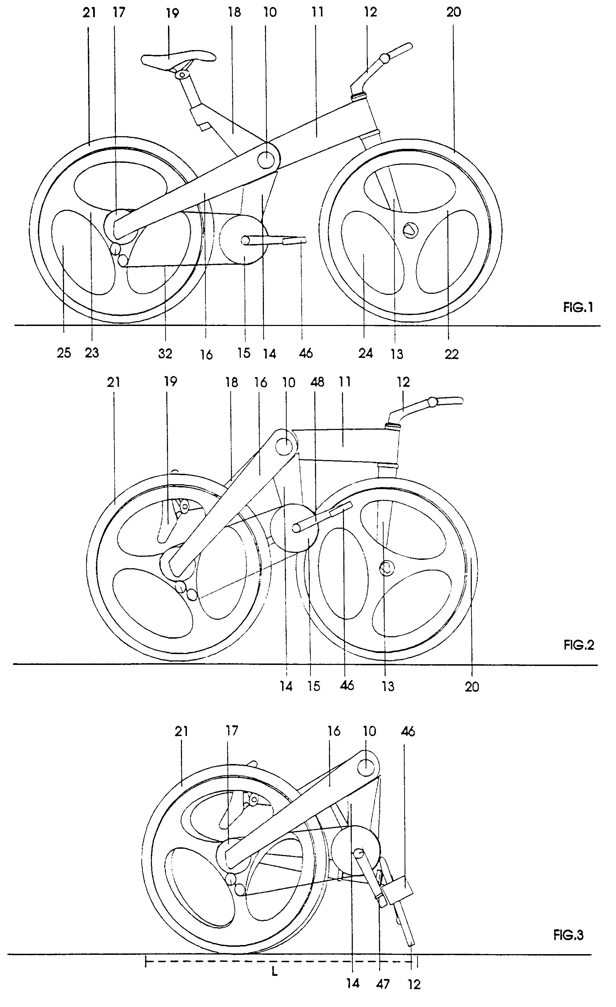

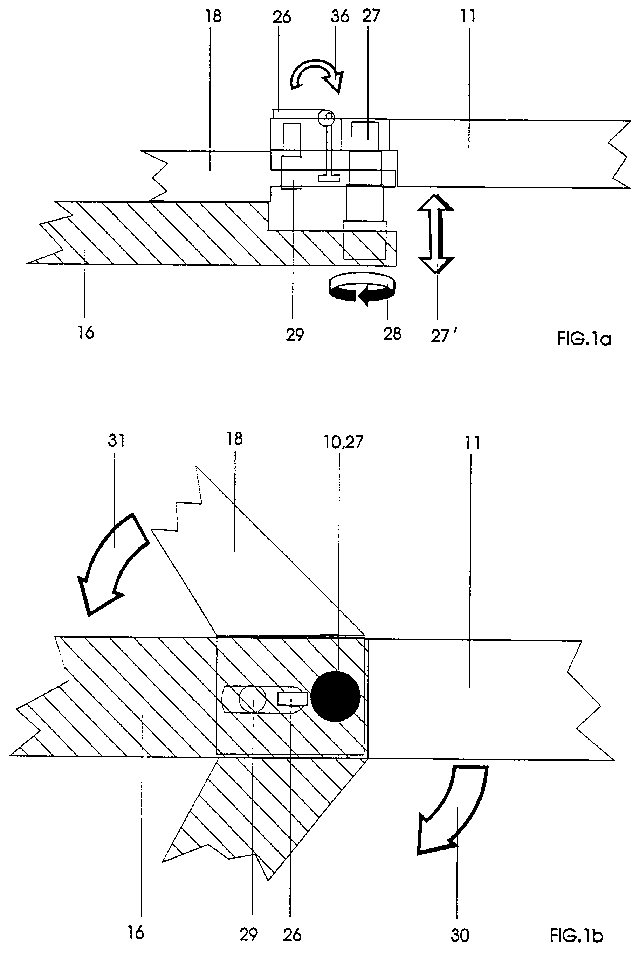

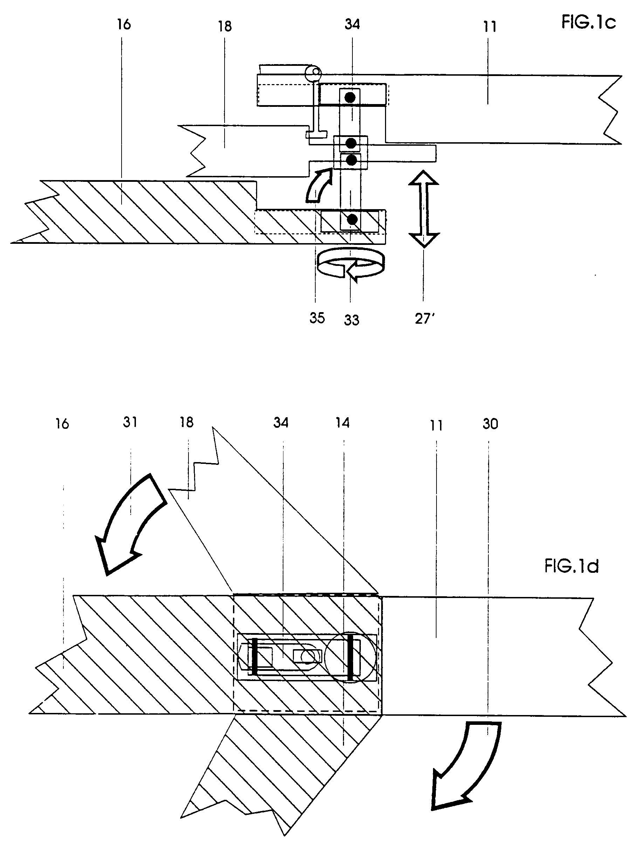

Das in Fig. 1 dargestellte Fahrrad besitzt vier um die Achse eines Drehgelenkes 10 in der Zeichenebene schwenkbare Rahmenteile, und zwar einen Rahmenteil 11 als Verbindung zur Aufnahme des Lenkers 12 und der einarmigen Gabel bzw. des Gabelarmes 13, ein weiteres Rahmenteil 14 zur Verbindung des Tretlagers 15 mit dem Rahmen, ein Rahmenteil 16 zur Verbindung mit der hinteren Radachse 17 und einen Rahmenteil 18 als Stütze für einen Sattel bzw. ein Sattelgestänge 19. Der (hintere) Rahmenteil 16 ist ebenfalls als einarmiges Gabelteil bzw. Gabelbaum ausgeführt. Die Räder, nämlich das Vorderrad 20 und das Hinterrad 21 können über handelsübliche Nabenverbindungen, auch Schnellspannverschlüsse, und in üblichen Größen ausgeführt sein. Insbesondere kann das in Fig. 1 dargestellte Rad als sogenanntes Mountainbike oder auch Trekkingrad ausgebildet sein. Die Räder besitzen vorzugsweise jeweils drei Speichen 22 bzw. 23, die einen jeweiligen Hohlraum 24 bzw. 25 lassen, so daß bei abgeschwenktem Rahmenteil 18 die seitlichen Übersstände des Sattels 19 in diese Hohlräume eingreifen können. Im übrigen besitzt das dargestellte Rad handelsübliche Gangschaltungen, insbesondere Kettenschaltungen, sowie nicht dargestellte Bremsen, Beleuchtungen, Reflektoren etc., die von der Straßenverkehrsordnung vorgeschrieben werden.

Erfindungsgemäß und wie im Detail aus Fig. 1 ersichtlich, kann nach Lösen eines Schnellspannverschlusses 26 ein Teleskop 27 ausgefahren werden, wodurch der Abstand der Rahmenteile 11 und 16 durch Verschiebung in Richtung des Doppelpfeiles 27' vergrößerbar ist. Die Teleskoplängsachse ist gleichzeitig Drehachse für die Rahmenteile 11, 14, 16 und 18. Die Drehbarkeit dieser Teiles ist durch Pfeil 28 angedeutet. Ein ggf. weiteres Teleskop 29 als Verbindung zwischen den Rahmenteilen 11 und 18 wird in Teilkreisnut der Rahmenaufnahme des Rahmenteiles 11 bei gegenseitigem Verschwenken der Teile 11 und 18 geführt.

Wie aus Fig. 1b ersichtlich, können die Rahmenteile 18 sowie 11 in Richtung der Pfeile 31 bzw. 30 um das Drehgelenk 10, das gleichzeitig Teleskop 27 ist, verschwenkt werden. Der Winkelabstand zwischen den Rahmenteilen 14 und 16 bleibt aufgrund der einteiligen Bauweise während des Verschwenkens konstant, so daß der Abstand des Tretlagers 15 zu Hinterachse 17 erhalten und die Kette 32 (siehe Fig. 1) gespannt bleibt.

Alternativ zu der Teleskopausführung nach Fig. 1a, 1b können auch Schwinghebel 33 und 34 vorgesehen sein, die (siehe Pfeil 35) um einen Winkel von 90° um eine Vertikalachse schwenkbar sind. Auch hierdurch ergibt sich eine Relativverschiebung entlang des Doppelpfeiles 27' der Rahmenteile 11 und 16 gegeneinander. Im übrigen entsprechen die Bezugszeichen in Fig. 1c und 1d denselben Bauteilen bzw. denselben Funktionen wie zu Fig. 1a, 1b erläutert.

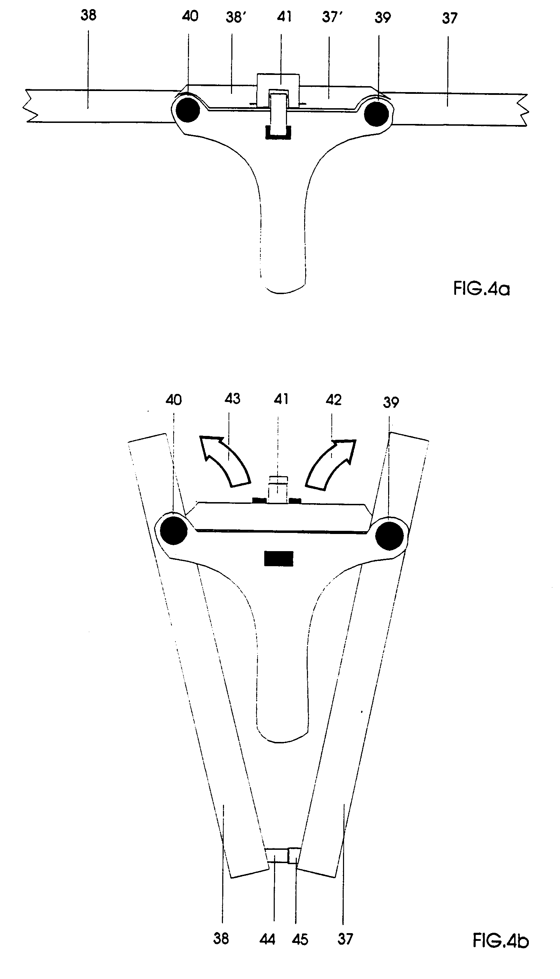

Nach Lösen des Schnellverschlusses 26 durch Aufklappen in Richtung des Pfeiles 36 (siehe Fig. 1a) und Teleskopieren des Teleskopgelenkes 27 lassen sich die Rahmenteile 11, 16 und 18 bzw. 14 über die in Fig. 2 dargestellte Stellung in die Endstellung nach Fig. 3 verschwenken. Hierbei kommen die beiden Räder 20 und 21 in eine kongruente Lage, da die Abstandsvergrößerung entsprechend Doppelpfeil 27' der Rahmenteile 11 und 16 so groß gewählt werden kann, daß die Räder 20 und 21 in eine Parallel-Versatzstellung gebracht werden können. Der Winkelabstand zwischen den Rahmenteilen 14 und 16 bleibt hierbei erhalten.

Nach einer weiteren Ausgestaltung ist der Lenker zweiteilig aufgebaut und besitzt Lenkerhälften 37 und 38, die um Drehpunkte 39 und 40 von der in Fig. 4a dargestellten Stellung in die abgeklappte Stellung nach Fig. 4b schwenkbar sind. Hierzu wird ein Schnellspannverschluß 41, der betreffende Schalenhälften 38' und 37' im gespannten Zustand übergreift und arretiert, gelöst und anschließend das Abklappen entlang der Pfeile 42 und 43 vollzogen. Am freien Lenkerende können die Lenkerhälften 37 und 38 noch korrespondierende Verschlußteile 44 und 45 aufweisen, die in der in Fig. 4b dargestellten Weise miteinander verriegelbar bzw. einrastbar sind. Um ein möglichst schmales Packmaß im eingeklappten Zustand zu realisieren, kann das aus der Außenkontur herausstehende Pedal 46, mittels eines arretierbaren Drehgelenkes 47 an der Tretkurbel 48 nach innen eingeklappt werden.

Der Vorteil des vorliegenden Fahrrades besteht darin, daß es in dichtester Weise zusammenschiebbar ist, wobei die Längserstreckung L entsprechend Fig. 3 im wesentlichen durch die Größe der Räder 20, 21 sowie dem Abstand der Hinterachse 17 vom Tretlager 15 bestimmt ist. Die Breite (Ausdehnung in senkrechter Richtung zur Fig. 3) wird bestimmt durch die doppelte Reifenbreite sowie die jeweilige Breite der Rahmenteile 11, 16 und deren Abstand, der zum Abschwenken des Rahmenteiles 18 bzw. des Sattels 19 benötigt wird.

Vorzugsweise wird das Fahrrad in Leichtbauweise gefertigt, d.h., unter Verwendung von Verbundkunststoffen (z.B. Carbon), Aluminiumteilen oder Chrom-Molybdän-Legierungen.

## Patentansprüche

1. Fahrrad mit einem arretierbaren, horizontal und am Rahmen angeordneten Drehgelenk (10), um dessen Achse die angelenkten Rahmenteile (11, 14, 16, 18) nach Lösen der Arretierung (26) schwenkbar sind,
**dadurch gekennzeichnet**,
daß die Rahmenteile (11, 14, 16, 18) über ein horizontal ausfahrbares Teleskop (27) und/oder über um eine vertikale Achse schwenkbare Schwingen (33, 34) aus ihrer Lage in einer Ebene parallel zueinander verschiebbar sind.

2. Fahrrad nach Anspruch 1, dadurch gekennzeichnet, daß von dem Drehgelenk (10) die Rahmenteile (11, 14, 16, 18) zur Halterung der Lenkeraufnahme, des Tretlagers (15) und des Hinterrades (21) sternförmig abstehen, wobei vorzugsweise der den Fahrradsitz (19) endseitig tragende Holm (18) endseitig mit dem Drehgelenk (10) verbunden ist.

3. Fahrrad nach einem der Ansprüche 1 oder 2, dadurch gekennzeichnet, daß der Rahmenteil (11, 16) zur Halterung der Lenkeraufnahme und/oder des Hinterrades (21) endseitig oder außenseitig des Teleskopes (27) oder (jeweils) einer der Schwingen (33, 34) angeorndet ist (sind).

4. Fahrrad nach einem der Ansprüche 1 bis 3, dadurch gekennzeichnet, daß die Gabel (13) zur Halterung des Vorderrades (20) und/oder der Rahmenteil (16) zur Halterung des Hinterrades (21) einarmig ist (sind), wobei vorzugsweise die Gabel (13) und der Rahmenteil (16) zur Halterung des Hinterrades (21) entlang ihrer oder seiner Längsachse gebogen ist, vorzugsweise um ein etwa der Radachsenlänge entsprechendes Maß versetzt ist (sind).

5. Fahrrad nach einem der Ansprüche 1 bis 4, dadurch gekennzeichnet, daß der Winkelabstand, den das Rahmenteil (14) des Tretlagers (15) und das Rahmenteil (16) zur Halterung des Hinterrades (21) im Drehgelenk (10) unveränderbar ist, vorzugsweise durch einteilige Bauweise, hingegen die übrigen Rahmenteile (11, 18) gegeneinander um eine horizontale Achse verdrehbar sind.

6. Fahrrad nach einem der Ansprüche 1 bis 5, dadurch gekennzeichnet, daß der den Fahrradsitz (19) tragende Holm (18) im wesentlichen mittig oder an einer Drehgelenkinnenseite auf der Drehachse des Drehgelenkes (10) angelenkt ist und/oder der Sattel (19) zwischen jeweiligen Ausnehmungen (24, 25) im Vorder- und im Hinterrad (20, 21) im zusammengeklappten Zustand des Fahrrades, bei dem die beiden Räder (20, 21) deckungsgleich nebeneinanderliegen, versenkbar ist.

7. Fahrrad nach einem der Ansprüche 1 bis 6, dadurch gekennzeichnet, daß der Lenker (12) zu kleineren Längenmaßen/Überständen zumindest teilweise zusammenklappbar ist, wobei vorzugsweise die beiden Lenkerhälften (37, 38) nach Lösen der Arretierung (41) parallel oder spitzwinklig zur Gabel (13) schwenkbar sind und/oder die Arretierung (41) jeweilige Schalen (37', 38') der Lenkerhälften (37, 38) übergreifende Spannverschlüsse (41) aufweist.

8. Fahrrad nach einem der Ansprüche 1 bis 7, dadurch gekennzeichnet, daß die Lenkerhälftenvorderseiten (37, 38) jeweils korrespondierende Verschlußteile (44, 45) aufweisen, über die die Lenkerhälften (37, 38) im zusammengeklappten Zustand aneinander arretierbar sind und/oder daß das Teleskop-Drehgelenk (27) über einen Schnellspannverschluß (26) arretierbar ist.

9. Fahrrad nach einem der Ansprüche 1 bis 8, gekennzeichnet durch eine identische Drehgelenkachse für alle Rahmenteile (11, 14, 16, 18) oder neben einer Hauptdrehachse, die gleichzeitig Teleskoplängsachse ist, weitere Drehachsen, die auf Satellitenbahnen um die Hauptdrehachse geführt werden vorzugsweise in Nuten oder über an der Drehachse angelenkte Hebel und/oder daß alle Anschläge in den Drehgelenken entsprechend den endseitigen Betriebszuständen - fahrbereit oder zusammengeklappt - die weitere Drehbarkeit blockieren.

10. Fahrrad nach einem der Ansprüche 1 bis 9, dadurch gekennzeichnet, daß mindestens ein Pedal (46) mittels eines arretierbaren Drehgelenkes (47) an der Tretkurbel (48) einklappbar ist.

## Claims

1. Bicycle with an arrestable, horizontal and on its frame arranged swivel joint (10) around the axis of which the hinged frame parts (11, 14, 16, 18) can swivel after loosening the locking device(26),
**characterised in that**
the frame parts (11, 14, 16, 18) are shiftable from their position into a level parallel to each other by a horizontal telescope (27) and/or by swivelable rocker-arms (33, 34) around a vertical axis.

2. Bicycle according to claim 1, characterised in that the frame parts (11, 14, 16, 18) for mounting the handle-bar support, the treadle bearing (15) and the rear wheel (21) protrude star-shaped from the swivel joint (10), whereby preferably the opposite end of the transom (18) supporting the bicycle seat (19) is connected with the swivel joint (10).

3. Bicycle according to one of claims 1 or 2, characterised in that the frame part (11, 16) for the support of the handle-bar support and/or the rear wheel (21) is arranged on the outside or endside of the telescope (27) or on (each of) the rocker-arms (33, 34).

4. Bicycle according to one of claims 1 to 3, characterised in that the fork (13) holding the front wheel (20) and/or the frame part (16) holding the rear wheel (21) is (are) one-armed, whereby preferably the fork (13) and the frame part (16) for supporting the rear wheel (21) are bent along its longitudinal axis, and preferably are staggered in approximately proportionate length of the wheel axis.

5. Bicycle according to one of claims 1 to 4, characterised in that the angular distance of the frame part (14) of the bearing (15) to the frame part (16) supporting the rear wheel (21) is unchangeable, preferably by one-piece mounting, but the remaining frame parts (11, 18) are rotational to each other around a horizontal axis.

6. Bicycle according to one of the claims 1 to 5, characterised in that the transom (18) supporting the bicycle seat (19) is hinged essentially concentric or on one inner side of the swivel joint (10) onto its swivel axis and/or the saddle (19) can be lowered between respective hollows (24, 25) in the front and the rear wheel (20, 21) when folding the bicycle in which position both wheels (20, 21) lie congruently side by side.

7. Bicycle according to one of the claims 1 to 6, characterised in that the handle-bar (12) is foldable at least partly into smaller extensions/protrudings, whereby preferably both handle-bar halves (37, 38) can be swivelled parallel or acute-angled to the fork (13) after loosening the locking device (41) and/or the locking device (41) has clamping devices (41) overlapping respective shells (37', 38') of the handle-bar halves (37, 38).

8. Bicycle according to one of the claims 1 to 7, characterised in that the front sides of the handle-bar halves (37, 38) have each corresponding locking parts (44, 45), which can arrest the handle-bar halves (37, 38) when the bicycle is folded and/or that the telescope-swivel-joint (27) can be arrested by a quick clamping device (26).

9. Bicycle according to one of the claims 1 to 8, characterised by an identical swivel joint axis for all frame parts (11, 14, 16, 18) or - beside one main swivel axis which is likewise the longitudinal telescope axis - by further axis which are guided on satellite paths around the main swivel axis, preferably in grooves or about levers hinged at the swivel axis and/or that all stops in the swivel joints block up all further swivelling respective to the end operating positions - mobile or folded.

10. Bicycle according to one of the claims 1 to 9, characterised in that at least one pedal (46) can be folded by means of an arresting swivel joint (47) at the treadle (48).

## Revendications

1. Bicyclette comprenant une articulation tournante (10) qui peut être arrêtée et est disposée horizontalement et sur le cadre, autour de l'axe de laquelle les pièces articulées (11, 14, 16, 18) du cadre peuvent pivoter après avoir desserré l'arrêt (26),
**caractérisée par le fait**
que les pièces (11, 14, 16, 18) du cadre peuvent être déplacées de leur position dans un plan parallèlement l'une par rapport à l'autre par l'intermédiaire d'un télescope (27) qui peut être déployé horizontalement et/ou par l'intermédiaire de leviers oscillants (33, 34) pivotant autour d'un axe vertical.

2. Bicyclette selon la revendication 1, caractérisée par le fait que les pièces (11, 14, 16, 18) du cadre destinées à supporter le logement du guidon, le palier (15) du pédalier et la roue arrière (21), sont arrangées en étoile autour de l'articulation tournante (10), de préférence, le montant (18) qui, à son extrémité, porte le siège (19) de la bicyclette étant relié à son autre extrémité à l'articulation tournante (10).

3. Bicyclette selon l'une des revendications 1 ou 2, caractérisée par le fait que la partie (11, 16) du cadre destinée à supporter le logement du guidon et/ou la roue arrière (21) est (sont) disposée(s) à l'extrémité ou sur la face extérieure du télescope (27) ou (respectivement) de l'un des leviers oscillants (33, 34).

4. Bicyclette selon l'une des revendications 1 à 3, caractérisée par le fait que la fourche (13) destinée à supporter la roue avant (20) et/ou la partie (16) du cadre destinée à supporter la roue arrière (21) a (ont) un seul bras, de préférence, la fourche (13) et la partie (16) du cadre pour supporter la roue arrière (21) étant courbées le long de leur axe longitudinal respectif, étant de préférence décalée(s) d'une mesure correspondant à peu près à la longueur de l'axe de la roue.

5. Bicyclette selon l'une des revendications 1 à 4, caractérisée par le fait que la distance angulaire entre la partie (14) du cadre supportant le palier (15) du pédalier et la partie (16) du cadre destinée à supporter la roue arrière (21) est inchangeable dans l'articulation tournante (10), de préférence par une construction en une seule partie, par contre, les autres parties (11, 18) du cadre peuvent être tournées l'une contre l'autre autour d'un axe horizontal.

6. Bicyclette selon l'une des revendications 1 à 5, caractérisée par le fait que le montant (18) portant le siège (19) de la bicyclette est articulé pour l'essentiel au milieu ou sur une face intérieure de l'articulation tournante sur l'axe de rotation de l'articulation tournante (10) et/ou que, en état plié de la bicyclette où les deux roues (20, 21) se trouvent l'une à côté de l'autre de façon coïncidente, la selle (19) peut être escamotée entre des évidements respectifs (24, 25) réalisés dans la roue avant et la roue arrière (20, 21).

7. Bicyclette selon l'une des revendications 1 à 6, caractérisée par le fait que le guidon (12) peut être plié au moins en partie de manière à présenter de plus faibles mesures de longueur/saillies, de préférence, les deux moitiés (37, 38) du guidon pouvant être pivotées parallèlement ou à angle aigu par rapport à la fourche (13) après avoir desserré l'arrêt (41) et/ou l'arrêt (41) présentant des fermetures de serrage (41) se prenant sur des coques respectives (37', 38') des moitiés (37, 38) du guidon.

8. Bicyclette selon l'une des revendications 1 a 7, caractérisée par le fait que les faces des moitiés (37, 38) du guidon présentent des pièces de fermeture (44, 45) respectivement correspondantes par l'intermédiaire desquelles les moitiés (37, 38) du guidon peuvent être arrêtées l'une sur l'autre en état plié et/ou que l'articulation tournante-télescope (27) peut être arrêtée par le biais d'une fermeture de serrage rapide (26).

9. Bicyclette selon l'une des revendications 1 a 8, caractérisée par un axe identique de l'articulation tournante pour toutes les parties (11, 14, 16, 18) du cadre ou, outre un axe principal de rotation qui est en même temps axe longitudinal du télescope, par d'autres axes de rotation qui sont guidés sur des trajectoires satellites autour de l'axe principal de rotation, de préférence dans des rainures ou par l'intermédiaire de leviers articulés sur l'axe de rotation, et/ou que toutes les butées dans les articulations tournantes bloquent l'autre possibilité de rotation selon les états de fonctionnement aux extrémités - prête à rouler ou pliée.

10. Bicyclette selon l'une des revendications 1 à 9, caractérisée par le fait que du moins un pédalier (46) peut être escamoté sur la manivelle de pédalier (48) au moyen d'une articulation tournante (47) qui peut être arrêtée.
